# EUROPEAN PATENT APPLICATION

(11) **EP 4 557 148 A1**
(43) Date of publication of application: **21.05.2025**
(21) Application number: 24212792.6
(22) Date of filing: 13.11.2024
(51) Int. Cl.: G06F 21/62

(54) **METHOD AND APPARATUS FOR CONTENT DETECTION, STORAGE MEDIUM, AND ELECTRONIC DEVICE**

(30) Priority: 14.11.2023 CN 202311514981
(71) Applicant: BEIJING YOUZHUJU NETWORK TECHNOLOGY CO. LTD., Beijing 101299 (CN)
(72) Inventor: LI, Chenglong, Beijing, 100028 (CN); YANG, Xiao, Beijing, 100028 (CN); LI, Xiaowei, Beijing, 100028 (CN)
(74) Representative: Dentons UK and Middle East LLP

(57) **Abstract**

A method and apparatus for content detection, a storage medium, and an electronic device are provided. The method includes: receiving first view information and second view information sent by a terminal device, where the first view information and the second view information are sent in response to traversing view hierarchies of all views displayed by the terminal device when the terminal device displays a first view and a traversal result representing presence of a second view with a view hierarchy higher than the first view, the first view being used to display target content; and determining a content detection result based on the first view information and the second view information. According to the above technical solution, content detection can be performed automatically, which improves the accuracy of content detection and also reduces the complexity of content detection, thereby improving the efficiency of content detection. In addition, the terminal device does not perform the content detection process, which can avoid the use of a lot of computing resources of the terminal device, thereby improving the processing performance of the terminal device and the user experience.

## Description

### CROSS-REFERENCE TO RELATED APPLICATION

This application claims the priority to and benefits of the Chinese Patent Application, No. 202311514981.7, which was filed on November 14, 2023, and is hereby incorporated by reference in its entirety.

### TECHNICAL FIELD

The present disclosure relates to the field of computer technology, and in particular, to a method and apparatus for content detection, a storage medium, and an electronic device.

### BACKGROUND

A display page may generally include a plurality of views, and different views may have the same or different view hierarchies. When different views have different view hierarchies, a view with a higher view hierarchy may occlude some of the views with a lower view hierarchy, making part or all of the display content in the views with a lower view hierarchy invisible.

### SUMMARY

The section Summary is provided to give a brief overview of concepts, which will be described in detail later in the section Detailed Description. The section Summary is neither intended to identify key or necessary features of the claimed technical solutions, nor is it intended to be used to limit the scope of the claimed technical solutions.

At least one embodiment of the present disclosure provides a method for content detection. The method includes:
receiving first view information and second view information sent by a terminal device, where the first view information and the second view information are sent in response to traversing view hierarchies of all views displayed by the terminal device are traversed when the terminal device displays a first view and a traversal result representing presence of a second view with a view hierarchy higher than the first view, the first view is used to display target content, the first view information is view information of the first view, and the second view information is view information of the second view; and
determining a content detection result based on the first view information and the second view information, the content detection result being used to represent whether display content in the first view is occluded by display content in the second view.

At least one embodiment of the present disclosure provides another method for content detection. The method includes:
in response to presence of a first view on a second display page that is used to display target content, traversing view hierarchies of all views on the second display page; and
in response to a traversal result representing presence of a second view with a view hierarchy higher than the first view on the second display page, sending first view information of the first view and second view information of the second view to a server to enable the server to determine a content detection result based on the first view information and the second view information, the content detection result being used to represent whether display content in the first view is occluded by display content in the second view.

At least one embodiment of the present disclosure provides an apparatus for content detection. The apparatus includes:
a receiving module configured to receive first view information and second view information sent by a terminal device, where the first view information and the second view information are sent in response to traversing view hierarchies of all views displayed by the terminal device when the terminal device displays a first view and a traversal result representing presence of a second view with a view hierarchy higher than the first view, the first view is used to display target content, the first view information is view information of the first view, and the second view information is view information of the second view; and
a first determination module configured to determine a content detection result based on the first view information and the second view information, the content detection result being used to represent whether display content in the first view is occluded by display content in the second view.

At least one embodiment of the present disclosure provides another apparatus for content detection. The apparatus includes:
a traversal module configured to, in response to presence of a first view on a second display page that is used to display target content, traverse view hierarchies of all views on the second display page; and
a sending module configured to, in response to a traversal result representing presence of a second view with a view hierarchy higher than the first view on the second display page, send first view information of the first view and second view information of the second view to a server to enable the server to determine a content detection result based on the first view information and the second view information, the content detection result being used to represent whether display content in the first view is occluded by display content in the second view.

At least one embodiment of the present disclosure provides a non-transient computer-readable storage medium storing computer programs, where the computer programs, upon being executed by a processor, cause the method provided by at least one of the above embodiments to be implemented.

At least one embodiment of the present disclosure provides an electronic device, which includes:
at least one memory storing computer programs; and
at least one processor configured to execute the computer programs in the at least one memory to implement the method provided by at least one of the above embodiments.

The other features and advantages of the present disclosure will be described in detail in the following section Detailed Description.

### BRIEF DESCRIPTION OF DRAWINGS

The foregoing and other features, advantages, and aspects of embodiments of the present disclosure become more apparent with reference to the following specific implementations and in conjunction with the accompanying drawings. Throughout the accompanying drawings, the same or similar reference numerals denote the same or similar elements. It should be understood that the accompanying drawings are schematic and that parts and elements are not necessarily drawn to scale. In the accompanying drawings:
Fig. 1 is a flowchart of a method for content detection according to an exemplary embodiment of the present disclosure;
Fig. 2 is a sequence diagram of a method for content detection according to an exemplary embodiment of the present disclosure;
Fig. 3 is a flowchart of another method for content detection according to an exemplary embodiment of the present disclosure;
Fig. 4 is a structural block diagram of an apparatus for content detection according to an exemplary embodiment of the present disclosure;
Fig. 5 is a structural block diagram of another apparatus for content detection according to an exemplary embodiment of the present disclosure; and
Fig. 6 is a structural schematic diagram of an electronic device according to an exemplary embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of' mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

Furthermore, it can be understood that the data involved in the technical solutions (including, but not limited to, the data itself and the access to or use of the data) shall comply with the requirements of corresponding laws, regulations, and relevant provisions.

As mentioned in the background, a display page may generally include a plurality of views, and different views may have the same or different view hierarchies. When different views have different view hierarchies, a view with a higher view hierarchy may occlude some of the views with a lower view hierarchy, making part of the display content in the views with a lower view hierarchy invisible, thus affecting the user experience.

In order to overcome the above technical problems, the following three methods are generally used for content detection in the related art.

Method 1: Before a display page goes online, that is, when the display page is in a test phase, a content detection result is determined by manually taking a screenshot of the display page for checking. This detection method requires screenshot processing, resulting in a cumbersome detection process, thus affecting the efficiency of content detection. In addition, this detection method requires manual operation, thus affecting the accuracy of content detection.

Method 2: After a display page goes online, a user gives feedback based on the display status of display content on the page. This detection method depends on the user's willingness to give feedback, resulting in low accuracy of content detection.

Method 3: After a display page goes online, a terminal device performs content detection based on the exposure area and/or exposure duration of a view. However, when there are many view hierarchies or there are many views on the display page, the complexity of traversal and computation on the views will increase exponentially with the number of view hierarchies and the number of views, which will use a lot of computing resources of the terminal device, thus affecting the performance of the terminal device and the user experience.

In view of this, the present disclosure provides a method and apparatus for content detection, a readable medium, and an electronic device, in order to overcome the above technical problems.

The embodiments of the present disclosure are further explained and described below with reference to the accompanying drawings.

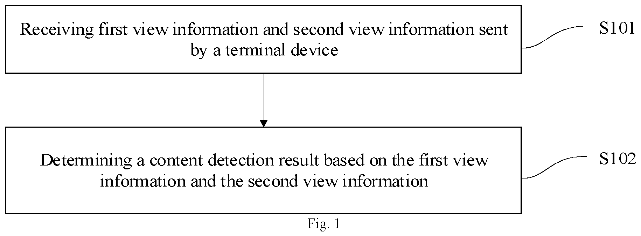

Fig. 1 is a flowchart of a method for content detection according to an exemplary embodiment of the present disclosure. Referring to Fig. 1, the method may include the following steps.

S101: receiving first view information and second view information sent by a terminal device, where the first view information and the second view information are sent in response to traversing view hierarchies of all views displayed by the terminal device when the terminal device displays a first view and a traversal result representing presence of a second view with a view hierarchy higher than the first view, the first view is used to display target content, the first view information is view information of the first view, and the second view information is view information of the second view.

It should be understood that the target content may be determined according to actual situations. For example, the target content may be information promotion content, or may be content of interest to the user, etc., which is not limited in the embodiments of the present disclosure.

S102: determining a content detection result based on the first view information and the second view information, the content detection result being used to represent whether display content in the first view is occluded by display content in the second view.

According to the above technical solution, when the first view information and the second view information sent by the terminal device are received, the content detection result used to represent whether the display content in the first view is occluded by the display content in the second view may be determined based on the first view information and the second view information. Compared with a method in the related art for determining a content detection result by manually taking a screenshot of a display page for checking, the solution provided in the present disclosure may not require screenshot processing, which can reduce the complexity of content detection, thereby improving the efficiency of content detection. In addition, the first view information and the second view information are automatically sent in response to traversing the view hierarchies of all the views displayed by the terminal device when the terminal device displays the first view and the traversal result representing the presence of the second view with a view hierarchy higher than the first view. Compared with the case in the related art where a user is required to manually give feedback on occlusion of content online, the solution provided in the present disclosure allows content detection to be performed automatically, which can avoid manual intervention, thereby improving the accuracy of content detection. In addition, the terminal device does not perform the content detection process, which can avoid the use of a lot of computing resources of the terminal device, thereby improving the processing performance of the terminal device and the user experience.

In a possible implementation, the determining a content detection result based on the first view information and the second view information may include:
determining a first display page based on the first view information and the second view information; and determining the content detection result based on the first display page.

The first view information and the second view information may be determined based on the method for content detection, which is not limited in the embodiments of the present disclosure. For example, when the method for content detection involves restoring the first display page of the first view and the second view in the terminal device and then performing content detection through the restored first display page, the first view information may include a view size, a view position, a view hierarchy, display content, etc. of the first view. Similarly, the second view information may include a view size, a view position, a view hierarchy, display content, etc. of the second view. Thus, the first display page of the first view and the second view in the terminal device may be restored based on the first view information and the second view information, and content detection may then be performed based on the first display page to determine whether the display content in the first view is occluded by the display content in the second view.

In a possible implementation, in order to avoid leakage of user information, user information in the first view and the second view may also be anonymized to obtain a first anonymized view and a second anonymized view that do not contain the user information, and then the page is restored based on the first anonymized view, the second anonymized view, the first view information, and the second view information, to obtain the first display page of the first view and the second view in the terminal device.

The method for anonymizing the user information in the first view and the second view may be determined according to actual situations, which is not limited in the embodiments of the present disclosure.

In a possible implementation, the anonymization of the user information may be implemented based on data replacement, or the anonymization of the data in the user information may be implemented based on data masking. For example, a data sequence ******* in the user information may be converted into a sequence *xxxxx*, etc.

In a possible implementation, in order to improve the efficiency of user information anonymization, a view anonymization rule for representing a correspondence between anonymized views and view names may be preset, so that after a view name is obtained, the corresponding anonymized view can be quickly obtained based on the view name and the view anonymization rule.

That is, according to an embodiment of the present disclosure, the determining a first display page based on the first view information and the second view information may include:
determining a first anonymized view based on a view anonymization rule that is preset and a view name in the first view information, and determining a second anonymized view based on the view anonymization rule and a view name in the second view information, where the view anonymization rule is used to represent a correspondence between an anonymized view and a view name, and the anonymized view is a view that does not include user information; and determining the first display page based on the first anonymized view, the second anonymized view, the first view information, and the second view information.

The expression method for the view anonymization rule may be set according to actual situations. For example, the view anonymization rule may be expressed by {anonymized view, view name}, may be expressed by anonymized view: view name, or may be expressed in the form of a table, etc., which is not limited in the embodiments of the present disclosure.

After the first display page is determined, a display area of the first display page and a total display area of the first view and the second view may be first determined, and then a content detection result may be determined by comparing the display area of the first display page with the total display area. That is, when the display area of the first display page is equal to the total display area, it is determined that the display content in the first view is not occluded by the display content in the second view. When the display area of the first display page is less than the total display area, it is determined that the display content in the first view is occluded by the display content in the second view.

In a possible implementation, in order to avoid leakage of user information and reduce the amount of computation for content detection, the user information in the first view and the second view may also be anonymized to obtain a first anonymized view and a second anonymized view that do not contain the user information, and then color rendering is performed on the first anonymized view to obtain a target anonymized view. In this way, after the first display page is determined based on the target anonymized view, the second anonymized view, the first view information, and the second view information, a content detection result may be determined based on the area of the target display color region on the first display page and the area of the first view.

That is, in a possible implementation, the determining a first display page based on the first view information and the second view information may include:
determining a first anonymized view based on a view anonymization rule that is preset and a view name in the first view information, and determining a second anonymized view based on the view anonymization rule and a view name in the second view information, where the view anonymization rule is used to represent a correspondence between an anonymized view and a view name, and the anonymized view is a view that does not include user information; rendering the first anonymized view according to a preset target display color, to obtain a target anonymized view; and determining the first display page based on the target anonymized view, the second anonymized view, the first view information, and the second view information.

It should be understood that the target display color may be set according to actual situations. For example, it may be set to yellow, red or green, etc., which is not limited in the embodiments of the present disclosure.

In addition, it should be understood that reference may be made to the relevant description of the method for anonymizing the user information in the first view and the second view and the expression method for the view anonymization rule, which is not repeated here.

In a possible implementation, the determining the content detection result based on the first display page may include:
determining a target display size of a target display color region on the first display page; and in response to the target display size being less than a display size in the first view information, determining that the content detection result is used to represent that the display content in the first view is occluded by the display content in the second view.

The method for determining the target display size of the target display color region may be set according to actual situations, which is not limited in the embodiments of the present disclosure. In a possible implementation, in order to improve the accuracy of content detection, the target display color may be set to red, and after the display page is obtained, the display page is converted from a red-green-blue (RGB) color space into a hue-saturation-value (HSV) color space in which a red hue is more obvious; then, a binary image of the red region may be extracted based on a red hue range in the HSV color space by means of an image segmentation technology; and finally, contour detection may be performed on the extracted binary image, and the corresponding area may be calculated, so as to obtain the target display size of the target display color region.

After the target display size is obtained, the content detection result is obtained by comparing the target display size with the display size in the first view information. That is, when the target display size is equal to the display size in the first view information, it is determined that the display content in the first view is not occluded by the display content in the second view. When the target display size is less than the display size in the first view information, it is determined that the display content in the first view is occluded by the display content in the second view.

According to the above technical solution, when the content detection is performed, only the target display size of the target display color region may be calculated, which can reduce the amount of computation, thereby improving the efficiency of content detection.

In a possible implementation, the method may further include:
in response to the content detection result representing that the display content in the first view is occluded by the display content in the second view and there being one second view, determining a first number of occlusions the display content in the second view occludes the display content in the first view; and in response to the first number of occlusions being greater than or equal to a preset threshold number of occlusions, transmitting the second view information to an alarm platform to enable the alarm platform to process the second view.

The threshold number of occlusions may be set to 3, 5, or 10 according to situations, which is not limited in the embodiments of the present disclosure.

In this embodiment, the first number of occlusions the display content in the second view occludes the display content in the first view is determined, and when the first number of occlusions is greater than or equal to the preset threshold number of occlusions, the second view information is transmitted to the alarm platform. In this way, only the second view that occurs frequently may be processed, which reduces the processing cost.

In a possible implementation, the method may further include:
in response to the content detection result representing that the display content in the first view is occluded by the display content in the second view and there being a plurality of second views, determining a target view that occludes the display content in the first view; determining a second number of occlusions display content in the target view occludes the display content in the first view; and in response to the second number of occlusions being greater than or equal to a preset threshold number of occlusions, transmitting view information of the target view to an alarm platform to enable the alarm platform to process the target view.

It should be understood that a display page may generally include a plurality of views, and different views may have the same or different view hierarchies. When different views have different view hierarchies, based on view positions of the views, a view with a higher view hierarchy may occlude a view with a lower view hierarchy. That is, when there are a plurality of second views, not all display content in each second view may occlude the display content in the first view. Thus, in order to avoid false processing of the second view, in this embodiment, in response to the content detection result representing that the display content in the first view is occluded by the display content in the second view and there being a plurality of second views, the target view that occludes the display content in the first view is first determined, then the second number of occlusions the display content in the target view occludes the display content in the first view is counted, and target view information is transmitted to the alarm platform when the second number of occlusions is greater than or equal to the preset threshold number of occlusions. In this way, only the target view that occurs frequently may be processed, which reduces the processing cost.

In order to more clearly understand the method for content detection of the present disclosure, the present disclosure is described below by way of specific examples.

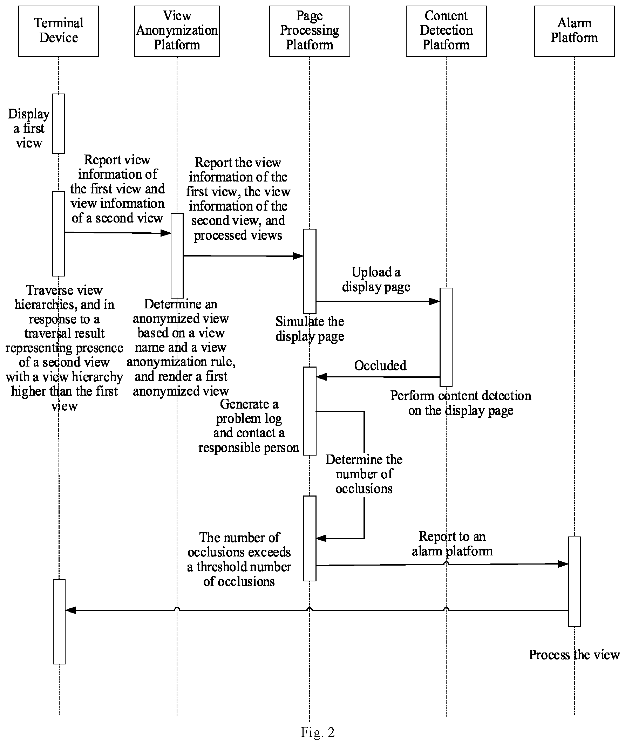

As shown in Fig. 2, a server may include a view anonymization platform, a page processing platform, a content detection platform, and an alarm platform.

In presence of a first view in the terminal device that is used to display target content, the terminal device traverses view hierarchies of all views, and when a traversal result represents presence of a second view with a view hierarchy higher than the first view in the terminal device, first view information of the first view and second view information of the second view are sent to the view anonymization platform.

The view anonymization platform acquires a first view name of the first view from the first view information, determines a first anonymized view based on the first view name and a pre-stored view anonymization rule, and after determining the first anonymized view, renders the first anonymized view according to a preset target display color, to obtain a target anonymized view. Moreover, the view anonymization platform acquires a second view name of the second view from the second view information, and determines a second anonymized view based on the second view name and a pre-stored view anonymization rule. Finally, the target anonymized view, the second anonymized view, the first view information, and the second view information are transmitted to the page processing platform.

The page processing platform simulates a first display page based on the target anonymized view, the second anonymized view, the first view information, and the second view information, and then transmits the simulated first display page to the content detection platform.

The content detection platform performs content detection based on the first display page, to determine a content detection result, and transmits the content detection result to the page processing platform when the content detection result represents that display content in the first view is occluded by display content in the second view.

The page processing platform generates a problem log based on the content detection result and reports same to the corresponding responsible person, and also determines, based on the content detection result, a number of occlusions display content in a target view (a view that occludes the display content in the first view) occludes the display content in the first view, and uploads view information of the target view to the alarm platform when the number of occlusions exceeds a preset threshold number of occlusions.

The alarm platform processes the corresponding view based on the view information of the target view, and brings same back online to the terminal device after processing.

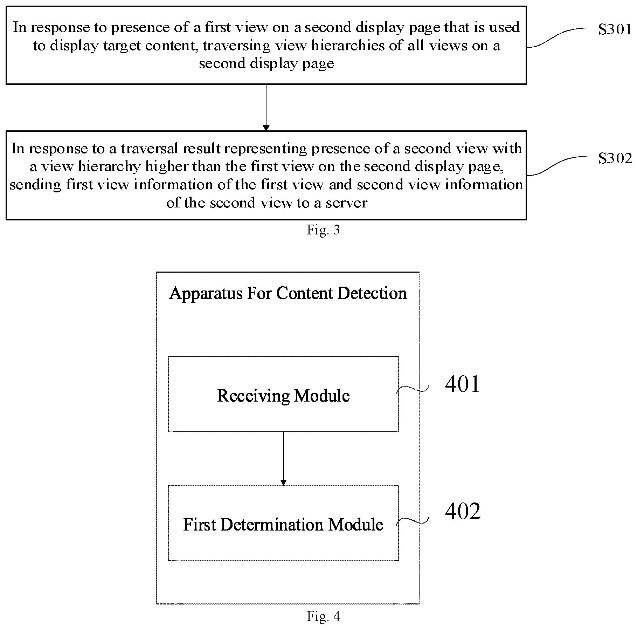

Based on the same concept, an embodiment of the present disclosure further provides a method for content detection. As shown in Fig. 3, the method may include:

S301: in response to presence of a first view on a second display page that is used to display target content, traversing view hierarchies of all views on a second display page.

It should be understood that the second display page is a display page that is currently being displayed.

In addition, it should be understood that the target content may be determined according to actual situations. For example, the target content may be information promotion content, or may be content of interest to a user, etc., which is not limited in the embodiments of the present disclosure.

S3 02: in response to a traversal result representing presence of a second view with a view hierarchy higher than the first view on the second display page, sending first view information of the first view and second view information of the second view to a server to enable the server to determine a content detection result based on the first view information and the second view information, the content detection result being used to represent whether display content in the first view is occluded by display content in the second view.

According to the above technical solution, in the presence of the first view on the second display page that is used to display the target content, the view hierarchies of all the views on the second display page may be traversed, and when the traversal result represents the presence of the second view with a view hierarchy higher than the first view on the second display page, the first view information of the first view and the second view information of the second view may be sent to the server to enable the server to determine the content detection result based on the first view information and the second view information. Compared with the case in the related art where a user is required to manually give feedback on occlusion of content online, the solution provided in the present disclosure allows content detection to be performed automatically, which can avoid manual intervention, thereby improving the accuracy of content detection. In addition, the terminal device does not perform the content detection process, which can avoid the use of a lot of computing resources of the terminal device, thereby improving the processing performance of the terminal device and the user experience.

In a possible implementation, the sending first view information of the first view and second view information of the second view to a server may include:
for each preset sending moment, sending to the server all the first view information and the second view information between a previous sending moment and a current sending moment; or
determining a number of traversals to the second view, and when the number of traversals is greater than or equal to a preset threshold number of traversals, sending to the server the first view information of the first view and the second view information of the second view obtained in each traversal.

It should be understood that the preset sending moment may be set according to actual situations, which is not limited in the embodiments of the present disclosure. For example, the terminal device may transmit the first view information and the second view information to the server every half hour. Specifically, before the sending moment, in response to the traversal result representing the presence of the second view with a view hierarchy higher than the first view on the display page, the first view information of the first view and the view information of the second view may be recorded; and at the sending moment, all the first view information and the second view information recorded between the previous sending moment and the current sending moment are transmitted to the server together.

In addition, it should be understood that the preset threshold number of traversals may be set according to actual situations, which is not limited in the embodiments of the present disclosure. For example, the terminal device may transmit the first view information and the second view information to the server once at the fifth traversal to the second view, that is, at the fifth traversal to the second view with a view hierarchy higher than the first view. Specifically, when the preset threshold number of traversals is not reached, in response to the traversal result representing the presence of the second view with a view hierarchy higher than the first view on the display page, the first view information of the first view and the view information of the second view may be recorded, and when the preset threshold number of traversals is reached, the first view information and the second view information obtained after five traversals may be sent to the server.

According to the above technical solution, the recorded first view information and second view information may be sent to the server at the preset sending moment, or the recorded first view information and second view information may be sent to the server when the recorded first view information and second view information reach a certain quantity. In this way, the number of communications between the terminal device and the server, and the number of times the terminal device establishes a communication connection with the server can be reduced, and the use of resources of the terminal device can thus be reduced, thereby improving the processing performance of the terminal device.

Based on the same concept, an embodiment of the present disclosure further provides an apparatus for content detection. As shown in Fig. 4, the apparatus may include:
a receiving module 401 configured to receive first view information and second view information sent by a terminal device, where the first view information and the second view information are sent in response to traversing view hierarchies of all views displayed by the terminal device when the terminal device displays a first view and a traversal result representing presence of a second view with a view hierarchy higher than the first view, the first view is used to display target content, the first view information is view information of the first view, and the second view information is view information of the second view; and
a first determination module 402 configured to determine a content detection result based on the first view information and the second view information, the content detection result being used to represent whether display content in the first view is occluded by display content in the second view.

According to the above technical solution, when the first view information and the second view information sent by the terminal device are received, the content detection result used to represent whether the display content in the first view is occluded by the display content in the second view may be determined based on the first view information and the second view information. Compared with a method in the related art for determining a content detection result by manually taking a screenshot of a display page for checking, the solution provided in the present disclosure may not require screenshot processing, which can reduce the complexity of content detection, thereby improving the efficiency of content detection. In addition, the first view information and the second view information are automatically sent in response to traversing the view hierarchies of all the views displayed by the terminal device when the terminal device displays the first view and the traversal result representing the presence of the second view with a view hierarchy higher than the first view. Compared with the case in the related art where a user is required to manually give feedback on occlusion of content online, the solution provided in the present disclosure allows content detection to be performed automatically, which can avoid manual intervention, thereby improving the accuracy of content detection. In addition, the terminal device does not perform the content detection process, which can avoid the use of a lot of computing resources of the terminal device, thereby improving the processing performance of the terminal device and the user experience.

In a possible implementation, the first determination module may include:
a first determination unit configured to determine a first display page based on the first view information and the second view information; and
a second determination unit configured to determine the content detection result based on the first display page.

In a possible implementation, the first determination unit may include:
a first determination sub-unit configured to determine a first anonymized view based on a view anonymization rule that is preset and a view name in the first view information, and determine a second anonymized view based on the view anonymization rule and a view name in the second view information, where the view anonymization rule is used to represent a correspondence between an anonymized view and a view name, and the anonymized view is a view that does not include user information; and
a second determination sub-unit configured to determine the first display page based on the first anonymized view, the second anonymized view, the first view information, and the second view information.

In a possible implementation, the first determination unit may include:
a third determination sub-unit configured to determine a first anonymized view based on a view anonymization rule that is preset and a view name in the first view information, and determine a second anonymized view based on the view anonymization rule and a view name in the second view information, where the view anonymization rule is used to represent a correspondence between an anonymized view and a view name, and the anonymized view is a view that does not include user information;
a rendering sub-unit configured to render the first anonymized view according to a preset target display color, to obtain a target anonymized view; and
a fourth determination sub-unit configured to determine the first display page based on the target anonymized view, the second anonymized view, the first view information, and the second view information.

In a possible implementation, the second determination unit may include:
a fifth determination sub-unit configured to determine a target display size of a target display color region on the first display page; and
a sixth determination sub-unit configured to, in response to the target display size being less than a display size in the first view information, determine that the content detection result is used to represent that the display content in the first view is occluded by the display content in the second view.

In a possible implementation, the apparatus may further include:
a second determination module configured to, in response to the content detection result representing that the display content in the first view is occluded by the display content in the second view and there being one second view, determine a first number of occlusions the display content in the second view occludes the display content in the first view; and
a first transmission module configured to, in response to the first number of occlusions being greater than or equal to a preset threshold number of occlusions, transmit the second view information to an alarm platform to enable the alarm platform to process the second view.

In a possible implementation, the apparatus may further include:
a third determination module configured to, in response to the content detection result representing that the display content in the first view is occluded by the display content in the second view and there being a plurality of second views, determine a target view that occludes the display content in the first view;
a fourth determination module configured to determine a second number of occlusions display content in the target view occludes the display content in the first view; and
a second transmission module configured to, in response to the second number of occlusions being greater than or equal to a preset threshold number of occlusions, transmit view information of the target view to an alarm platform to enable the alarm platform to process the target view.

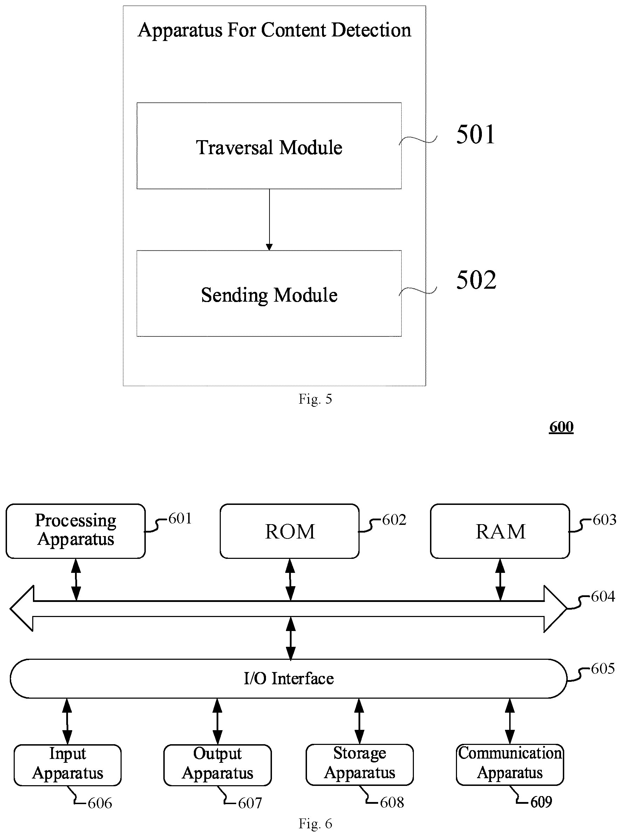

Based on the same concept, an embodiment of the present disclosure further provides an apparatus for content detection. As shown in Fig. 5, the apparatus may include:
a traversal module 501 configured to, in response to presence of a first view on a second display page that is used to display target content, traverse view hierarchies of all views on the second display page; and
a sending module 502 configured to, in response to a traversal result representing presence of a second view with a view hierarchy higher than the first view on the second display page, send first view information of the first view and second view information of the second view to a server to enable the server to determine a content detection result based on the first view information and the second view information, the content detection result being used to represent whether display content in the first view is occluded by display content in the second view.

According to the above technical solution, in the presence of the first view on the second display page that is used to display the target content, the view hierarchies of all the views on the second display page may be traversed, and in response to the traversal result representing the presence of the second view with a view hierarchy higher than the first view on the second display page, the first view information of the first view and the second view information of the second view may be sent to the server to enable the server to determine the content detection result based on the first view information and the second view information. Compared with the case in the related art where a user is required to manually give feedback on occlusion of content online, the solution provided in the present disclosure allows content detection to be performed automatically, which can avoid manual intervention, thereby improving the accuracy of content detection. In addition, the terminal device does not perform the content detection process, which can avoid the use of a lot of computing resources of the terminal device, thereby improving the processing performance of the terminal device and the user experience.

In a possible implementation, the sending module may include:
a first sending unit configured to, for each preset sending moment, send to the server all the first view information and the second view information between a previous sending moment and a current sending moment; or
a second sending unit configured to determine a number of traversals to the second view, and in response to the number of traversals being greater than or equal to a preset threshold number of traversals, sending to the server the first view information of the first view and the second view information of the second view obtained in each traversal.

Based on the same concept, an embodiment of the present disclosure further provides a non-transient computer-readable storage storing computer programs, where the computer programs, upon being executed by a processor, cause the method provided by at least one of the above embodiments to be implemented.

Based on the same concept, an embodiment of the present disclosure further provides an electronic device. The electronic device includes:
at least one memory storing computer programs; and
at least one processor configured to execute the computer programs in the at least one memory to implement the method provided by at least one of the above embodiments.

Referring to Fig. 6, this figure is a schematic diagram of a structure of an electronic device 600 adapted to implement the embodiments of the present disclosure. The terminal device in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in Fig. 6 is merely an example, and shall not impose any limitation on the function and scope of use of the embodiments of the present disclosure.

As shown in Fig. 6, the electronic device 600 may include a processing apparatus (e.g., a central processing unit or a graphics processing unit) 601 that may perform a variety of appropriate actions and processing in accordance with a program stored in a read-only memory (ROM) 602 or a program loaded from a storage apparatus 608 into a random access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a tape and a hard disk; and a communication apparatus 609. The communication apparatus 609 may allow the electronic device 600 to perform wireless or wired communication with other devices to exchange data. Although Fig. 6 shows the electronic device 600 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transient computer-readable storage medium, where the computer program includes program code for performing the method shown in the flowchart. In such an embodiment, the computer program may be downloaded from a network through the communication apparatus 609 and installed, installed from the storage apparatus 608, or installed from the ROM 602. When the computer program is executed by the processing apparatus 601, the above-mentioned functions defined in the method of the embodiments of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, communication may be performed using any currently known or future-developed network protocol such as a hypertext transfer protocol (HTTP), and interconnection with digital data communication (e.g., a communication network) in any form or medium may be achieved. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above non-transient computer-readable storage may be contained in the above electronic device. Alternatively, the computer-readable medium may exist independently, without being assembled into the electronic device.

The above non-transient computer-readable storage carries one or more programs that, when executed by the electronic device, cause the electronic device to: receive first view information and second view information sent by a terminal device, where the first view information and the second view information are sent in response to traversing view hierarchies of all views displayed by the terminal device when the terminal device displays a first view and a traversal result representing presence of a second view with a view hierarchy higher than the first view, the first view being used to display target content, the first view information is view information of the first view, and the second view information is view information of the second view; and determine a content detection result based on the first view information and the second view information, the content detection result is used to represent whether display content in the first view is occluded by display content in the second view.

Alternatively, the above non-transient computer-readable storage carries one or more programs. The one or more programs, when executed by the electronic device, cause the electronic device to: traverse view hierarchies of all views on a display page in response to presence of a first view on the display page that is used to display target content; and in response to a traversal result representing presence of a second view with a view hierarchy higher than the first view on the display page, send first view information of the first view and second view information of the second view to a server to enable the server to determine a content detection result based on the first view information and the second view information, the content detection result being used to represent whether display content in the first view is occluded by display content in the second view.

The computer program code for performing the operations of the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules described in the embodiments of the present disclosure may be implemented by software, or may be implemented by hardware. The names of the modules in a certain scenario do not constitute a limitation on the modules themselves.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims. With respect to the apparatus in the above embodiments, the specific manner in which each module performs an operation has been described in detail in the embodiments relating to the method, and will not be detailed herein.

## Claims

1. A method for content detection, comprising:
receiving first view information and second view information sent by a terminal device (S101), wherein the first view information and the second view information are sent in response to traversing view hierarchies of all views displayed by the terminal device when the terminal device displays a first view and a traversal result representing presence of a second view with a view hierarchy higher than the first view, the first view is used to display target content, the first view information is view information of the first view, and the second view information is view information of the second view; and
determining a content detection result based on the first view information and the second view information (S102), wherein the content detection result is used to represent whether display content in the first view is occluded by display content in the second view.

2. The method according to claim 1, wherein the determining a content detection result based on the first view information and the second view information comprises:
determining a first display page based on the first view information and the second view information; and
determining the content detection result based on the first display page.

3. The method according to claim 2, wherein the determining a first display page based on the first view information and the second view information comprises:
determining a first anonymized view based on a view anonymization rule that is preset and a view name in the first view information, and determining a second anonymized view based on the view anonymization rule and a view name in the second view information, wherein the view anonymization rule is used to represent a correspondence between an anonymized view and a view name, and the anonymized view is a view that does not comprise user information; and
determining the first display page based on the first anonymized view, the second anonymized view, the first view information, and the second view information.

4. The method according to claim 2, wherein the determining a first display page based on the first view information and the second view information comprises:
determining a first anonymized view based on a view anonymization rule that is preset and a view name in the first view information, and determining a second anonymized view based on the view anonymization rule and a view name in the second view information, wherein the view anonymization rule is used to represent a correspondence between an anonymized view and a view name, and the anonymized view is a view that does not comprise user information;
rendering the first anonymized view according to a preset target display color, to obtain a target anonymized view; and
determining the first display page based on the target anonymized view, the second anonymized view, the first view information, and the second view information.

5. The method according to claim 4, wherein the determining the content detection result based on the first display page comprises:
determining a target display size of a target display color region on the first display page; and
in response to the target display size being less than a display size in the first view information, determining that the content detection result is used to represent that the display content in the first view is occluded by the display content in the second view.

6. The method according to any one of claims 1 to 5, further comprising:
in response to the content detection result representing that the display content in the first view is occluded by the display content in the second view and there being one second view, determining a first number of occlusions the display content in the second view occludes the display content in the first view; and
in response to the first number of occlusions being greater than or equal to a preset threshold number of occlusions, transmitting the second view information to an alarm platform to enable the alarm platform to process the second view.

7. The method according to any one of claims 1 to 5, further comprising:
in response to the content detection result representing that the display content in the first view is occluded by the display content in the second view and there being a plurality of second views, determining a target view that occludes the display content in the first view;
determining a second number of occlusions display content in the target view occludes the display content in the first view; and
in response to the second number of occlusions being greater than or equal to a preset threshold number of occlusions, transmitting view information of the target view to an alarm platform to enable the alarm platform to process the target view.

8. A method for content detection, comprising:
in response to presence of a first view on a second display page that is used to display target content, traversing view hierarchies of all views on the second display page (S301); and
in response to a traversal result representing presence of a second view with a view hierarchy higher than the first view on the second display page, sending first view information of the first view and second view information of the second view to a server (S302) to enable the server to determine a content detection result based on the first view information and the second view information, wherein the content detection result is used to represent whether display content in the first view is occluded by display content in the second view.

9. The method according to claim 8, wherein the sending first view information of the first view and second view information of the second view to a server comprises:
for each preset sending moment, sending to the server all the first view information and the second view information between a previous sending moment and a current sending moment; or
determining a number of traversals to the second view, and in response to the number of traversals being greater than or equal to a preset threshold number of traversals, sending to the server the first view information of the first view and the second view information of the second view obtained in each traversal.

10. An apparatus for content detection, comprising:
a receiving module (401), configured to receive first view information and second view information sent by a terminal device, wherein the first view information and the second view information are sent in response to traversing view hierarchies of all views displayed by the terminal device when the terminal device displays a first view and a traversal result representing presence of a second view with a view hierarchy higher than the first view, the first view is used to display target content, the first view information is view information of the first view, and the second view information is view information of the second view; and
a first determination module (402), configured to determine a content detection result based on the first view information and the second view information, wherein the content detection result is used to represent whether display content in the first view is occluded by display content in the second view.

11. The apparatus according to claim 10, wherein the first determination module comprises:
a first determination unit, configured to determine a first display page based on the first view information and the second view information; and
a second determination unit, configured to determine the content detection result based on the first display page.

12. The apparatus according to claim 11, wherein the first determination unit comprises:
a first determination sub-unit, configured to determine a first anonymized view based on a view anonymization rule that is preset and a view name in the first view information, and determine a second anonymized view based on the view anonymization rule and a view name in the second view information, wherein the view anonymization rule is used to represent a correspondence between an anonymized view and a view name, and the anonymized view is a view that does not comprise user information; and
a second determination sub-unit, configured to determine the first display page based on the first anonymized view, the second anonymized view, the first view information, and the second view information.

13. An apparatus for content detection, comprising:
a traversal module (501) configured to, in response to presence of a first view on a second display page that is used to display target content, traverse view hierarchies of all views on the second display page; and
a sending module (502) configured to, in response to a traversal result representing presence of a second view with a view hierarchy higher than the first view on the second display page, send first view information of the first view and second view information of the second view to a server to enable the server to determine a content detection result based on the first view information and the second view information, wherein the content detection result being is to represent whether display content in the first view is occluded by display content in the second view.

14. A non-transient computer-readable storage medium, storing computer programs, wherein the computer programs, upon being executed by a processor, cause the method according to any one of claims 1 to 9 to be implemented.

15. An electronic device, comprising:
at least one memory storing computer programs; and
at least one processor configured to execute the computer programs in the at least one memory, to implement the steps of the method according to any one of claims 1 to 9.
